# EUROPÄISCHE PATENTSCHRIFT

(11) **EP 1 325 834 B1**
(45) Veröffentlichungstag und Bekanntmachung des Hinweises auf die Patenterteilung: **31.08.2005**
(21) Anmeldenummer: 02028320.6
(22) Anmeldetag: 17.12.2002
(51) Int. Cl.: B60K 35/00, A01D 41/127, B60R 16/02

(54) **Bordcomputersystem für ein Arbeitsfahrzeug**
Board computer system for a working vehicle
Système d'ordinateur de bord pour un véhicule de travail

(30) Priorität: 22.12.2001 DE 10163947
(43) Veröffentlichungstag der Anmeldung: 09.07.2003
(73) Patentinhaber: DEERE & COMPANY, Illinois 61265-8098 (US); Dr.Ing. h.c.F. Porsche Aktiengesellschaft, 70435 Stuttgart (DE)
(72) Erfinder: Braunhardt, Klaus, 66482 Zweibrücken (DE); Bischoff, Lutz, 66503 Dellfeld (DE); Beck, Folker, Dr., Bettendorf, IA 52722 (US); Stankewitz, Britta, 75181 Pforzheim (DE); Ehinger, Peter, 71254 Ditzingen (DE)
(74) Vertreter: Holst, Sönke

(56) Entgegenhaltungen:
- EP-A- 0 499 567
- EP-A- 1 031 263
- DE-A- 3 609 927
- DE-A- 3 708 324
- DE-A- 19 715 325
- DE-A- 19 961 376
- US-A- 4 376 298
- US-A- 5 978 720

## Beschreibung

Die Erfindung betrifft ein Bordcomputersystem für ein insbesondere landwirtschaftliches Arbeitsfahrzeug.

In der DE 40 29 312 A wird eine optische Anzeigevorrichtung für ein Fahrzeug beschrieben, bei der Betriebsdaten auf eine Frontscheibe des Fahrzeugs projiziert werden. Die anzuzeigenden Daten werden entweder über einen mit einer Steuerung verbundenen Betriebsartenschalter, der auch zur Auswahl der Betriebsart der Maschine dient, oder automatisch abhängig von der Bedeutung der Daten ausgewählt, indem diese mit vorgegebenen Grenzwerten verglichen und bei deren Überschreitung zur Anzeige gebracht werden. Es wird jeweils ein Betriebsartenkennzeichen und der betreffende Betriebswert zur Anzeige gebracht.

In der DE 200 13 646 U wird ein Computerdisplay in einer land- oder forstwirtschaftlichen Maschine vorgeschlagen, bei dem eine Ausgabe auf einer zusätzlichen, relativ großen Folie erfolgt. Die Folie kann auch mit Eingabetasten ausgestattet sein. Die anzuzeigenden Daten, die Eingabetasten und die Größe und Farbe der Daten sind auswählbar.

Die gattungsbildende EP 1 031 263 A bezieht sich auf eine Vorrichtung zur Einstellung von Arbeitsparametern zur Steuerung von landwirtschaftlichen Maschinen. Die Vorrichtung umfasst eine Steuer- und Regeleinheit, an der ein Bedienterminal, Sensoren und Aktoren angeschlossen sind. Mit dem Bedienterminal kann der Bediener die Betriebsparameter der Maschine eingeben. Das Bedienterminal ist auch mit einem Anzeigeelement versehen. Es werden verschiedene Betriebsmodi der Steuer- und Regeleinheit vorgeschlagen. Neben einem so genannten normalen Betriebsmodus ist beispielsweise bei der ersten Inbetriebnahme ein Einstellmodus vorgesehen, in dem Parameter eingebbar sind. Im Falle eines Ausfalls des Bedienterminals ist ein Not-Betriebsmodus vorgesehen, der auch mittels eines Schalters aktiviert werden kann. Im Not-Betriebsmodus können Eingaben über Sensoren erfolgen, die normalerweise zur Erfassung von Betriebsdaten der Maschine dienen. Die Art der Anzeigen und möglichen Eingaben in den einzelnen Modi wird nicht näher spezifiziert.

Die DE 36 09 927 A beschreibt eine Anlage mit einem Betriebssteuersystem, in dem verschiedene Betriebsabläufe und zugehörige Betriebsparameter abgespeichert sind und im Betrieb abgerufen werden können. Abhängig von der Qualifikation des Bedienungspersonals sind unterschiedliche Betriebsparameter abrufbar. Die Betriebsparameter werden angezeigt und vom Personal zur Bedienung der Anlage genutzt. Eine Änderungsmöglichkeit der im Betriebssteuersystem abgespeicherten Betriebsparameter wird nicht offenbart.

In der DE 199 61 376 A wird ein elektronisches Gerät in einem Kraftfahrzeug vorgeschlagen, bei dem abhängig von der Fahrgeschwindigkeit Eingabefunktionen der Bedieneinrichtung und Funktionsanzeigen der Anzeigeeinrichtung gesperrt werden.

Landwirtschaftliche Erntemaschinen, insbesondere Mähdrescher, sind relativ komplexe Maschinen mit einer relativ hohen Anzahl an Gutbearbeitungseinrichtungen, deren Betriebsparameter den jeweiligen Erntebedingungen anzupassen sind. Die Einstellungen sind relativ kritisch, da sie alle das Arbeitsergebnis stark beeinflussen. Bei aktuellen Maschinen werden fast alle oder alle verstellbaren Gutbearbeitungseinrichtungen durch eine Steuereinrichtung, die einen oder mehrere, über die Maschine verteilte Mikroprozessoren umfasst, elektronisch eingestellt bzw. geregelt. Die jeweiligen Betriebsparameter können über Anzeigevorrichtungen abgerufen und durch Eingabemittel geändert werden. Während erfahrene Bedienungspersonen in der Regel keine Schwierigkeiten haben, alle zur Verfügung stehenden Betriebsparameter abzulesen und, wenn sinnvoll, zu verändern, sind weniger erfahrene Bedienungspersonen oft von den in hoher Anzahl vorliegenden Betriebsparameteranzeigen überfordert. Sie sind auch häufig nicht in der Lage, sinnvolle Eingaben durchzuführen.

Die der Erfindung zugrunde liegende Aufgabe wird darin gesehen, eine Steuereinrichtung für eine Arbeitsmaschine bereitzustellen, die von Bedienungspersonen mit unterschiedlichen Vorkenntnissen gut bedienbar ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, dass die Steuereinrichtung wahlweise in wenigstens einer ersten und einer zweiten Betriebsart betreibbar ist. In der ersten Betriebsart, die sich insbesondere für erfahrene Bedienungspersonen eignet, kann eine hohe Anzahl von Betriebsparametern des Arbeitsfahrzeugs durch Eingaben geändert und vorzugsweise auch angezeigt werden. Die zweite Betriebsart eignet sich insbesondere für wenig erfahrene Bedienungspersonen und ermöglicht eine Eingabe und ggf. Anzeige von wesentlich weniger Betriebsparametern als die erste Betriebsart. Es wird in der Regel mindestens ein Betriebsparameter angezeigt. Eine Eingabemöglichkeit muss in der zweiten Betriebsart nicht unbedingt vorhanden sein. Die Betriebsart wird anhand einer von der jeweiligen Bedienungsperson abhängigen Information ausgewählt. So können in einer Tabelle die Namen der möglichen Bedienungspersonen und die den Namen zugeordneten Betriebsarten abgespeichert sein. Nach Eingabe des Namens wird die Betriebsart selbsttätig ausgewählt. Das System kann auch durch Passwörter abgesichert werden. In einer einfacheren Ausführungsform wird die Betriebsart durch den Bediener ausgewählt.

Auf diese Weise werden dem Fortgeschrittenen alle Einstellmöglichkeiten zur Verfügung gestellt, während einem Anfänger eine einfach zu bedienende Oberfläche angeboten wird. Denkbar sind auch weitere Betriebsarten, deren Schwierigkeitsgrad zwischen der ersten und zweiten Betriebsart liegt.

Die auf der Anzeigeeinrichtung wiedergebbaren Betriebsparameter sind in der Regel Einstellwerte von Aktoren und/oder Messwerte von Sensoren oder daraus abgeleitete Werte. In der Regel wird eine Information über den Betriebsparameter (dessen Name oder eine Kurzform) und der jeweilige Wert angezeigt. Eingebbare Betriebsparameter können Einstellwerte eines Aktors oder gewünschte Arbeitsergebnisse, wie beispielsweise Kornverluste oder andere Zielvorgaben sein. Die Steuereinrichtung steuert den Aktor oder die Aktoren in Abhängigkeit von den eingegebenen Betriebsparametern. In den Fällen, in denen bestimmte Betriebsparameter nicht eingebbar sind, insbesondere in der zweiten Betriebsart, greift die Steuereinrichtung auf berechnete und/oder abgespeicherte Werte für die Betriebsparameter zurück. Dabei können auch Messwerte von Sensoren berücksichtigt werden. In beiden Betriebsarten können durch die Bedienungsperson änderbare Vorgaben angezeigt werden, die auf berechneten und/oder abgespeicherten Werten beruhen.

Eine von der Steuereinrichtung berücksichtigte Information, welche der Betriebsparameter der Arbeitsmaschine in den unterschiedlichen, auswählbaren Betriebsarten anzeig- und/oder änderbar sind, kann fest abgespeichert sein. Es kann auch eine Eingabe- bzw. Änderungsmöglichkeit durch die Bedienungsperson oder nach Eingabe eines speziellen Passworts vorgesehen sein.

In einer bevorzugten Ausführungsform ist die Sprache, in der Informationen auf der Anzeigeeinheit wiedergegeben werden, auswählbar. Dazu sind die zur Anzeige einer Information benötigten Daten unter unterschiedlichen Adressen in einem Speicher abgelegt. Anhand der ausgewählten, gewünschten Sprache werden die zur Anzeige einer Information jeweils benötigten Daten an der entsprechenden Adresse aus dem Speicher ausgelesen. Die Sprache kann werksseitig länderspezifisch definiert oder von der Bedienungsperson (ggf. nach Passworteingabe) änderbar sein.

Die anzeigbaren Betriebsparameter haben häufig unterschiedliche Relevanz für die Bedienungsperson. So ist die Temperatur in der Kabine weniger wichtig als der Erntegutdurchsatz. Auch ist die Temperatur des Motors grundsätzlich wenig interessant, solange sie nicht einen Grenzwert unter- oder überschreitet. Um die Aufmerksamkeit der Bedienungsperson auf besonders wichtige Betriebsparameter lenken zu können, bietet es sich daher an, eine farbige Anzeigeeinrichtung zu verwenden und die Farbe der angezeigten Betriebsparameter entsprechend der relativen Wichtigkeit des jeweiligen Betriebsparameters auszuwählen. Wichtige Betriebsparameter können fortdauernd in Signalfarben, beispielsweise rot, angezeigt werden, oder nur dann, wenn ein bestimmter Grenzwert überschritten ist. Den anzeigbaren Betriebsparametern wird dazu eine Wichtigkeits- und/oder Farbinformation zugeordnet.

Das erfindungsgemäße Bordcomputersystem eignet sich für beliebige Arbeitsmaschinen, beispielsweise Forst-, Land- oder Baumaschinen. Wegen der oben angesprochenen Problematik der hohen Anzahl der Aktoren, die relativ komplexe Anzeigen erfordern können, die weniger erfahrene Bedienungspersonen möglicherweise überfordern, ist es jedoch besonders für Erntemaschinen geeignet, bei denen der Aktor oder die Aktoren zur Einstellung von Gutbearbeitungseinrichtungen vorgesehen sind.

Bei Erntemaschinen kann von der jeweils zu erntenden Fruchtart abhängen, welche Betriebsparameter für die Bedienungsperson von besonderem Interesse sind. So kann bei einer ersten Fruchtart der Dreschtrommelspalt besonders kritisch sein, während bei einer zweiten Fruchtart die Sieböffnung am kritischsten ist. Es wird daher vorgeschlagen, dass die jeweilige Fruchtart eingebbar und/oder durch einen Sensor erfassbar ist, und dass die anzeig- und/oder eingebbaren Betriebsparameter von der erfassten Fruchtart abhängen. Um eine möglichst einfache Bedienung der Erntemaschine zu ermöglichen, können jeweils nur die besonders kritischen Betriebsparameter anzeigbar bzw. änderbar sein. Dabei muss sich die Anzahl der änder- und/oder anzeigbaren Betriebsparameter in den fruchtartabhängigen Betriebsarten der Steuereinrichtung nicht unbedingt unterscheiden.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Mähdreschers,
- Fig. 2: eine schematische Ansicht eines Bordcomputersystems,
- Fig. 3: eine Ansicht der Anzeige der Bedieneinheit in der ersten Betriebsart,
- Fig. 4: eine Ansicht der Anzeige der Bedieneinheit in der zweiten Betriebsart, und
- Fig. 5: ein Flussdiagramm, nach dem die Steuereinheit arbeitet.

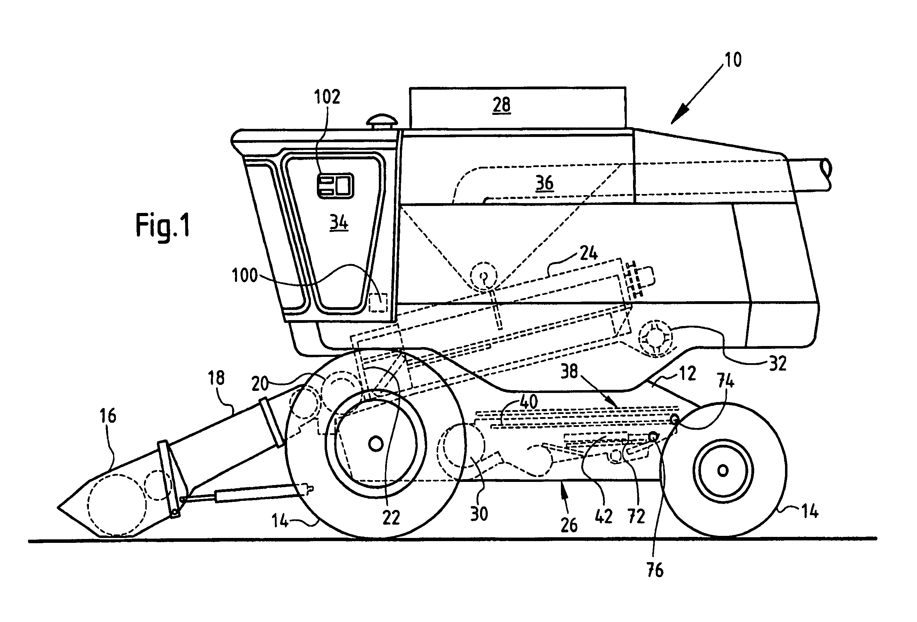

Figur 1 zeigt die Seitenansicht eines selbstfahrenden landwirtschaftlichen Mähdreschers 10. Obwohl die vorliegende Erfindung als an einem Axialflussmähdrescher angebracht offenbart wird, kann sie auch an konventionellen und anderen Mähdreschern wie auch an beliebigen anderen Typen von Arbeits- und Landmaschinen verwendet werden.

Der Mähdrescher 10 umfasst eine tragende Struktur 12 mit Rädern 14. Vom Mähdrescher 10 erstreckt sich ein Schneidwerk 16 nach vorn, das geerntetes Gut einem Schrägförderer 18 zuführt. Der Schrägförderer 18 enthält eine Fördereinrichtung, um das geerntete Gut den Dresch-, Trenn- und Reinigungseinrichtungen des Mähdreschers 10 zuzuführen. Der Schrägförderer 18 führt das geerntete Gut einer sich quer erstreckenden Leittrommel 20 zu, die das Gut durch einen Einlassübergangsbereich 22 einer axialen Dresch- und Trenneinrichtung 24 zuführt. Korn und Spreu werden von der axialen Dresch- und Trenneinrichtung 24 einer Reinigungseinrichtung 26 zugeführt. Die Reinigungseinrichtung 26 führt das saubere Korn wiederum einem Korntank 28 zu und die Spreu wird durch das Reinigungsgebläse 30 an der Rückseite des Mähdreschers hinaus geblasen. Erntegut, das weder Korn noch Spreu ist, wird von der axialen Dresch- und Trenneinrichtung 24 einer quer angeordneten Leittrommel 32 zugeführt, die das Material an der Rückseite des Mähdreschers 10 hinaus befördert. Zeitweise im Korntank 28 gespeichertes Erntegut kann durch Betätigung einer Entladeförderschnecke 36 auf Veranlassung durch einen Bediener in einer Bedienerkabine 34 entladen werden.

In der Reinigungseinrichtung 26 sind ein Obersieb 40 und ein Untersieb 42 übereinander angeordnet. Die Siebe 40, 42 selbst vollführen während des Betriebes der Reinigungseinrichtung 26 eine Schwingung derart, dass das von der Dresch- und Trenneinrichtung 24 abgetrennte Erntegut aufgenommen und entgegen der Fahrtrichtung des Mähdreschers 10 weitergefördert wird. Das Obersieb 40 und das Untersieb 42 sind mit quer verlaufenden, einstellbaren Lamellen versehen, die in einem rechtwinkligen Rahmen befestigt sind, der von den Seitenwänden eines Siebkastens getragen wird. Zur Erzielung des optimalen Reinigungsgrades der Reinigungseinrichtung 26 kann die Gebläsedrehzahl des Gebläses 30 und die Öffnungsweite der Siebe 40, 42 verändert werden. Den Sieben 40 bzw. 42 ist daher jeweils ein Verstellantrieb 74 bzw. 76 zur Verstellung der Sieböffnungsweite zugeordnet. Die elektromotorischen Verstellantriebe 74, 76 sind zur Verstellung des Schwenkwinkels der Lamellen eingerichtet. Jeweils ein nicht eingezeichneter Sieböffnungssensor ist eingerichtet, die Stellung der Lamellen des Untersiebs 42 zu erfassen. Dem Obersieb 40 ist ebenfalls ein nicht eingezeichneter Sieböffnungssensor zugeordnet. Eine in der Bedienerkabine 34 angeordnete elektrisch mit den Sieböffnungssensoren und den Verstellantrieben 74, 76 in Verbindung stehende Steuereinrichtung 100 kann die Verstellantriebe 74, 76 sich derart drehen lassen, dass die Lamellen in die jeweils gewünschte Stellung verbracht werden.

Die in der Bedienerkabine 34 des Mähdreschers 10 angeordnete Steuereinrichtung 100, welche die Verstellantriebe 74, 76 ansteuert, ist außer mit den Sieböffnungssensoren mit einem weiteren Sensor verbunden. Unter dem Untersieb 42 ist ein Abscheidesensor 72 angeordnet, der die Menge des vom Untersieb nach unten abgegebenen Korns misst.

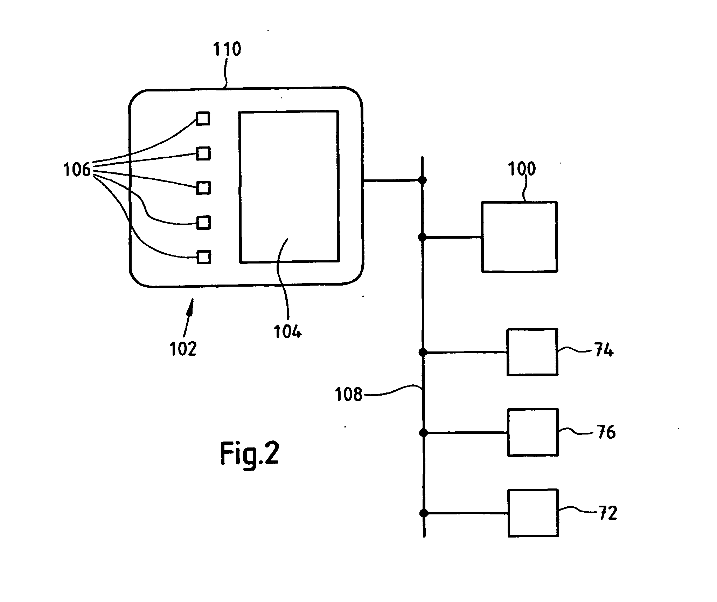

In der Bedienerkabine 34 ist eine Bedieneinheit 102 angeordnet, die in der Figur 2 detaillierter dargestellt ist. Die Bedieneinheit 102 weist ein Gehäuse 110 auf, in dem eine Anzeigeeinrichtung 104 und eine Eingabeeinrichtung in Form von links neben der Anzeigeeinrichtung 104 angeordneten Eingabetasten 106 vorhanden sind. Anstelle der Eingabetasten 106 oder zusätzlich dazu kann auch eine Spracheingabeeinrichtung oder eine beliebige andere Eingabeeinrichtung vorgesehen sein.

Die Bedieneinheit 102 ist durch eine Leitung mit einem Bus 108 verbunden, mit dem auch die Verstellantriebe 74, 76 und der Abscheidesensor 72 verbun den sind. Die Anzeigeeinrichtung 104 zeigt dem Bediener verschiedene Betriebsparameter des Mähdreschers 10 an. Die Eingabetasten 106 ermöglichen eine Änderung und/oder Auswahl von Betriebsparametern. Die Steuereinrichtung 100 erhält die jeweiligen Eingabedaten von den Eingabetasten 106 und veranlasst über den Bus 108, dass die jeweils betroffenen Aktoren oder anderen elektronisch beeinflussbaren Elemente des Mähdreschers 10 auf den gewünschten Wert eingestellt werden. Beispielsweise bei der Öffnungsweite der Siebe 40, 42 findet eine Regelung mit Hilfe der Sieböffnungssensoren statt, welche den jeweiligen Sieböffnungswert an die Steuereinrichtung 100 übermitteln. Die Steuereinrichtung 100 veranlasst dann eine Verstellung der Lamellen durch die Verstellantriebe 74 bzw. 76. Außerdem kann die Steuereinrichtung 100 die Vortriebsgeschwindigkeit des Mähdreschers 10, die Drehzahl der axialen Dresch- und Trenneinrichtung 24, die Spaltgröße im Dresch- und/oder Trennbereich, die Drehzahl des Hauptantriebsmotors und andere Betriebsparameter einstellen bzw. regeln. Es ist eine teilweise oder vollständige Automatisierung möglich, wobei die Steuereinrichtung 100 die Betriebsparameter der von ihr beeinflussbaren Aktoren des Mähdreschers 10 in Abhängigkeit von Sensorsignalen (z.B. vom Abscheidesensor 72) einstellt, so dass nur noch wenige oder keine manuellen Eingaben über die Eingabetasten 106 erforderlich sind.

In der Bedieneinheit 102 sind elektronische Bauelemente untergebracht, die eine Übertragung der von der Anzeigeeinrichtung 104 anzuzeigenden Daten und der mit den Eingabetasten 106 eingegebenen Daten über den Bus 108 an die Steuereinrichtung 100 ermöglichen. Die Bedieneinheit 102 kann mit einem eigenen Mikroprozessor und/oder Mikrocontroller ausgestattet sein. Es wäre auch denkbar, die Steuereinrichtung 100 in die Bedieneinheit 102 zu integrieren bzw. umgekehrt. Die Bedieneinheit 102 kann abnehmbar sein, um sie an anderen Maschinen verwenden zu können.

Der Mähdrescher 10 enthält somit eine relativ hohe Anzahl an Elementen, deren Einstellung das Arbeitsergebnis des Mähdreschers 10 beeinflussen können. Es ist nur einer relativ erfahrenen Bedienungsperson möglich, allen beeinflussbaren Elementen des Mähdreschers 10 die jeweils optimalen Betriebsparameter zuzuordnen. Für eine weniger erfahrene Bedienungsperson ist es sinnvoller, wenn die Betriebsparameter vorgegeben sind und möglichst wenig Eingaben erforderlich sind, da dann die Fehlermöglichkeiten geringer sind.

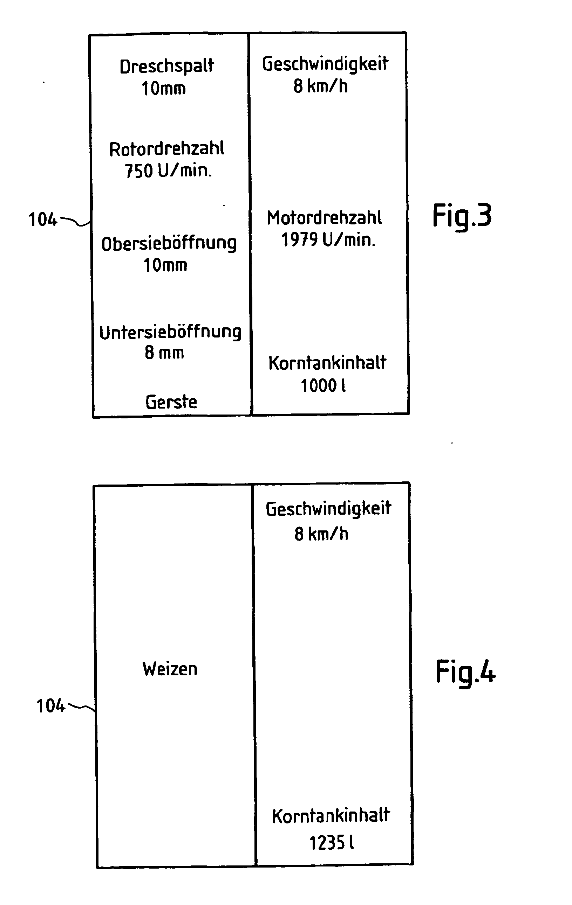

Erfindungsgemäß stellt die Bedieneinrichtung 102 verschiedene Betriebsarten bereit. In einer ersten Betriebsart, die sich insbesondere für erfahrene Bedienungspersonen eignet, sind die Betriebsparameter von allen einstellbaren Elementen anzeig- und änderbar. Sie müssen nicht alle gleichzeitig auf der Anzeigeeinrichtung 104 dargestellt werden, sondern können über Menüs und Untermenüs abrufbar sein, in denen sinnvoll zusammenfassbare Betriebsparameter gruppiert sein können. Die Bedienungsperson kann diese Parameter entsprechend ihrer Erfahrungen und Vorstellungen über die Eingabetasten 106 verändern. Die Figur 3 zeigt ein Beispiel der Anzeigeeinrichtung 104 in der ersten Betriebsart. Auf der linken Hälfte der Anzeigeeinrichtung 104 sind änderbare Parameter und die jeweils ausgewählten Werte dargestellt, nämlich Dreschspaltgröße, Drehzahl des Rotors der Dresch- und Trenneinrichtung 24, die Öffnungsweiten des Obersiebs 40 und des Untersiebs 42 und die Fruchtart. Die rechte Hälfte der Anzeigeeinrichtung 104 zeigt Parameter, die fest vorgegeben sind (z.B. die Motordrehzahl), die mit anderen Mitteln als mit den Eingabetasten 106 veränderbar sind (z.B. die Vortriebsgeschwindigkeit, die mit einem Fahrhebel einstellbar ist), oder die nur indirekt beeinflussbar sind oder das Arbeitsergebnis repräsentieren (z.B. den Korntankinhalt).

Falls eine Bedienungsperson mit nur wenig Erfahrung den Mähdrescher bedient, wird die Bedieneinrichtung 102 in einer zweiten Betriebsart betrieben. In dieser Betriebsart sind nur relativ wenig Eingaben möglich. Ein Beispiel ist in der Figur 4 dargestellt, in der in der linken Hälfte der Anzeigeeinrichtung 104 nur die Fruchtart anzeigt wird. Die rechte Hälfte der Anzeigeeinrichtung 104 zeigt ebenfalls weniger Daten an als in der ersten Betriebsart; die Motordrehzahl wird nicht angezeigt. In der zweiten Betriebsart sind mit den Eingabetasten 106 nur die in der linken Hälfte der Anzeigeeinheit 104 wiedergegebenen Parameter, im dargestellten Beispiel also nur die Fruchtart, änderbar. Die Steuereinrichtung 100 stellt die von ihr beeinflussbaren Elemente des Mähdreschers 10 auf Betriebsparameter ein, die anhand der eingegebenen Fruchtart berechnet bzw. aus einer Tabelle ausgelesen werden. Dabei können Messwerte von Sensoren, beispielsweise vom Abscheidesensor 72, berücksichtigt werden. Die zweite Betriebsart ermöglicht der Bedienungsperson nur die Änderung der Fruchtart, welche die Steuereinrichtung 100 der Einstellung der Betriebsparameter zu Grunde legt, aber keiner weiteren Parameter. Es besteht somit nur eine geringe Gefahr, dass das Arbeitsergebnis durch Eingabefehler verschlechtert wird.

Die Anzeigeeinrichtung 104 zeigt auf ihrer linken Hälfte die Betriebsparameter an, die mit den Eingabetasten 106 geändert werden können. Die jeweilige Bedeutung der Eingabetasten 106 wird somit durch (Bild- und/oder Schrift-) Zeichen auf dem benachbarten Bereich der Anzeigeeinrichtung 104 wiedergegeben. Im Beispiel gemäß Figur 4 kann mit der oberen Eingabetaste 106 die Furchtart eingegeben werden. Es können auch weitere Tasten vorgesehen sein, mit denen beispielsweise ein Cursor steuerbar ist oder Menüs und Untermenüs abrufbar sind.

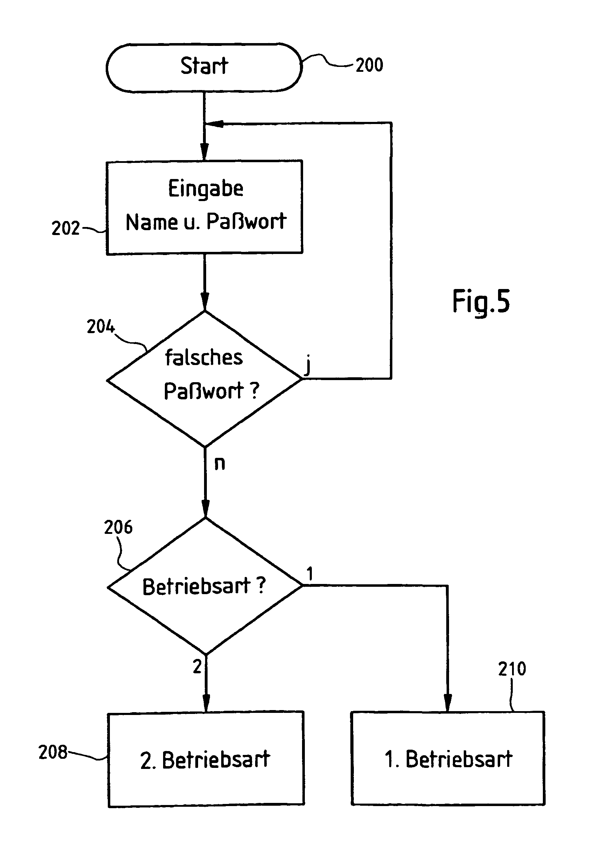

In der Figur 5 ist ein Flussdiagramm dargestellt, nach dem die Steuereinrichtung 100 beim Starten des Hauptantriebsmotors des Mähdreschers 10 vorgeht. Nach dem Start in Schritt 200 wird im Schritt 202 dem Bediener die Möglichkeit gegeben, mittels der Eingabetasten 106 seinen Namen und ein Passwort einzugeben. Die Namen und Passwörter der Personen, die berechtigt sind, den Mähdrescher 10 zu bedienen, sind in einem Speicher der Steuereinrichtung 100 abgelegt, was durch einen Supervisor erfolgen kann, der eine entsprechende Berechtigung hat. In der Steuereinrichtung 100 ist auch eine Information abgelegt, welcher Bedienungsperson welche Betriebsart zugeordnet ist.

Im folgenden Schritt 204 wird abgefragt, ob ein falsches Passwort eingegeben wurde. Ist das der Fall, folgt wieder Schritt 202. Anderenfalls folgt Schritt 206, in der abgefragt wird, welche Betriebsart der Bedienungsperson zugeordnet ist. Ist ihr die erste Betriebsart zugeordnet, folgt Schritt 210, in dem die Bedieneinrichtung 102 in der ersten Betriebsart arbeitet. Anderenfalls folgt Schritt 208, in dem die Bedieneinrichtung 102 in der zweiten Betriebsart arbeitet.

## Patentansprüche

1. Bordcomputersystem für ein insbesondere landwirtschaftliches Arbeitsfahrzeug, mit einer elektronischen Steuereinrichtung (100), die mit wenigstens einem Aktor, einer Anzeigeeinrichtung (104) und einer Eingabeeinrichtung verbunden ist, wobei die Anzeigeeinrichtung (104) betreibbar ist, Betriebsparameter des Arbeitsfahrzeugs anzuzeigen, die Eingabeeinrichtung zur Eingabe von Betriebsparametern des Arbeitsfahrzeugs durch eine Bedienungsperson eingerichtet ist, die Steuereinrichtung (100) eingerichtet ist, den Aktor mit Steuersignalen zu beaufschlagen, die von den mit der Eingabeeinrichtung eingegebenen Betriebsparametern abhängen und wahlweise in einer ersten Betriebsart und in einer zweiten Betriebsart betreibbar ist, **dadurch gekennzeichnet, daß** die Steuereinrichtung (100) betreibbar ist, die Betriebsart anhand einer von der jeweiligen Bedienungsperson abhängigen Information auszuwählen, und die Steuereinrichtung (100) derart betreibbar ist, dass in der ersten Betriebsart eine höhere Anzahl von Betriebsparametern mittels der Eingabeeinrichtung änderbar ist als in der zweiten Betriebsart.

2. Bordcomputersystem nach Anspruch 1, **dadurch gekennzeichnet, dass** in der ersten Betriebsart eine höhere Anzahl von Betriebsparametern durch die Anzeigeeinrichtung (104) anzeigbar ist als in der zweiten Betriebsart.

3. Bordcomputersystem nach Anspruch 1 oder 2, **dadurch gekennzeichnet, dass** die in den jeweiligen Betriebsarten anzeig- und änderbaren Betriebsparameter fest abgespeichert und/oder eingebbar sind.

4. Bordcomputersystem nach einem der Ansprüche 1 bis 3, **dadurch gekennzeichnet, dass** die Anzeigevorrichtung (104) mit Daten beaufschlagbar ist, die aus Speichern mit verschiedenen Adressen abrufbar sind, wobei die Adresse des jeweils abgerufenen Speichers von einer auswählbaren Sprache abhängt.

5. Bordcomputersystem nach einem der Ansprüche 1 bis 4, **dadurch gekennzeichnet, dass** die Anzeigeeinheit (104) farbig ist, und dass die Farbe der jeweils angezeigten Betriebsparameter von ihrer relativen Wichtigkeit abhängt.

6. Erntemaschine mit einem daran angebrachten Bordcomputersystem nach einem der Ansprüche 1 bis 5, wobei der Aktor zur Einstellung einer Gutbearbeitungseinrichtung eingerichtet ist.

7. Erntemaschine nach Anspruch 6, **dadurch gekennzeichnet, dass** die jeweils zu erntende Fruchtart eingebbar und/oder durch einen Sensor erfassbar ist, und dass die anzeig- und/oder eingebbaren Betriebsparameter von der jeweiligen Fruchtart abhängen.

## Claims

1. On-board computer system for an agricultural work vehicle in particular, with an electronic control unit (100), which is connected to at least one actuator, a display unit (104) and an input unit, wherein the display unit (104) can be operated to display operating parameters of the work vehicle, the input unit is arranged for the input of operating parameters of the work vehicle through an operator, the control unit (100) is arranged to transmit control signals to the actuator, which are a function of the operating parameters input with the input unit, and can be operated selectively in a first operating mode and in a second operating mode, **characterised in that** the control unit (100) can be operated to select the operating mode on the basis of information dependent on the respective operator, and the control unit (100) can be operated in such a manner that in the first operating mode a higher number of operating parameters can be changed by means of the input unit than in the second operating mode.

2. On-board computer system according to Claim 1, **characterised in that** in the first operating mode a higher number of operating parameters can be displayed through the display unit (104) than in the second operating mode.

3. On-board computer system according to Claim 1 or 2, **characterised in that** the operating parameters, which can be displayed and changed in the respective operating modes, are permanently stored in memory and/or can be input.

4. On-board computer system according to one of Claims 1 to 3, **characterised in that** the display unit (104) can be supplied with data, which can be recalled from memories with different addresses, wherein the address of the respectively recalled memory is a function of a language that can be selected.

5. On-board computer system according to one of Claims 1 to 4, **characterised in that** the display unit (104) is coloured, and that the colour of the respectively displayed operating parameters is a function of its relative importance.

6. Harvesting machine with an attached on-board computer system according to one of Claims 1 to 5, wherein the actuator is arranged for adjusting a crop processing assembly.

7. Harvesting machine according to Claim 6, **characterised in that** the type of crop to be respectively harvested can be input and/or detected by a sensor, and that the operating parameters, which can be displayed and/or input, are a function of the respective type of crop.

## Revendications

1. Système d'ordinateur de bord pour un véhicule de travail, en particulier agricole, comprenant un dispositif de commande (100) électronique, qui est relié à au moins un actionneur, un dispositif d'affichage (104) et un dispositif d'entrée, le dispositif d'affichage (104) pouvant être utilisé pour afficher des paramètres de service du véhicule de travail, le dispositif d'entrée étant aménagé pour l'entrée de paramètres de service du véhicule de travail par un opérateur, le dispositif de commande (100) étant aménagé pour commander l'actionneur en signaux de commande qui dépendent des paramètres de service entrés par le dispositif d'entrée et pouvant être utilisé au choix dans un premier mode de service et dans un second mode de service, **caractérisé en ce que** le dispositif de commande (100) peut être utilisé pour sélectionner le mode de service à l'aide d'une information dépendante de l'opérateur respectif, et le dispositif de commande (100) pouvant être utilisé de telle sorte que, dans le premier mode de service, un nombre de paramètres de service plus élevé que dans le second mode de service peut être modifié au moyen du dispositif d'entrée.

2. Système d'ordinateur de bord selon la revendication 1, **caractérisé en ce que**, dans le premier mode de service, un nombre de paramètres de service plus élevé que dans le second mode de service peut être affiché par le dispositif d'affichage (104).

3. Système d'ordinateur de bord selon la revendication 1 ou 2, **caractérisé en ce que** les paramètres de service pouvant être affichés ou modifiés dans les modes de service respectifs sont mémorisés de façon fixe et/ou peuvent être entrés.

4. Système d'ordinateur de bord selon l'une quelconque des revendications 1 à 3, **caractérisé en ce que** le dispositif d'affichage (104) peut être alimenté en données qui peuvent être appelées à partir de mémoires avec différentes adresses, l'adresse de la mémoire respectivement appelée dépendant d'une langue pouvant être sélectionnée.

5. Système d'ordinateur de bord selon l'une quelconque des revendications 1 à 4, **caractérisé en ce que** l'unité d'affichage (104) est en couleur, et **en ce que** la couleur des paramètres de service respectivement affichés dépend de leur importance relative de récolte.

6. Moissonneuse comportant un système d'ordinateur de bord selon l'une quelconque des revendications 1 à 5, l'actionneur étant aménagé pour le réglage du dispositif de traitement du matériau.

7. Moissonneuse selon la revendication 6, **caractérisé en ce que** le type de produit respectif à récolter peut être entré et/ou peut être déterminé par un capteur, et **en ce que** les paramètres de service pouvant être affichés et/ou entrés dépendent du type de produit respectif.
